# EUROPÄISCHE PATENTSCHRIFT

(11) **EP 2 652 032 B1**
(45) Veröffentlichungstag und Bekanntmachung des Hinweises auf die Patenterteilung: **25.02.2015**
(21) Anmeldenummer: 11805469.1
(22) Anmeldetag: 15.12.2011
(51) Int. Cl.: C08K 5/3492, C08K 5/5313, C08K 7/02, C08L 77/00, C08K 13/04

(54) **GLÜHDRAHTBESTÄNDIGE POLYAMIDE**
GLOW WIRE-RESISTANT POLYAMIDES
POLYAMIDES RÉSISTANTS AU FIL INCANDESCENT

(30) Priorität: 16.12.2010 EP 10195324
(43) Veröffentlichungstag der Anmeldung: 23.10.2013
(73) Patentinhaber: BASF SE, 67056 Ludwigshafen (DE)
(72) Erfinder: ROTH, Michael, 64686 Lautertal (DE); USKE, Klaus, 67098 Bad Dürkheim (DE)
(86) Internationale Anmeldenummer: PCT/EP2011/072923
(87) Internationale Veröffentlichungsnummer: WO 2012/080403

(56) Entgegenhaltungen:
- WO-A1-2008/132111
- WO-A1-2011/000457

## Beschreibung

Thermoplastische Formmassen enthaltend
A) 29 bis 97,5 Gew.-% eines thermoplastischen Polyamides,
B) 1 bis 20 Gew.-% Melamincyanurat.
C) 0,5 bis 10 Gew.-% einer organischen Phosphorverbindung basierend auf 9,10-Dihydro-9-oxa-10-phosphaphenanthrenoxid (DOPO) als Grundgerüst, enthaltend als Komponente C) Oligomere der Formel 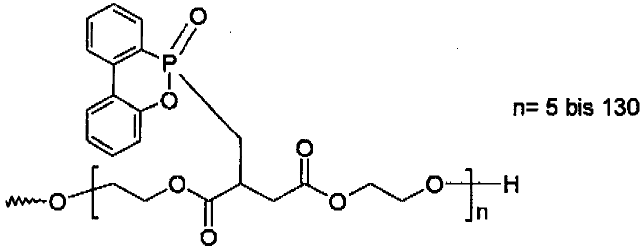 oder Oligomere aus DOPO mit Acrylsäureestern der Formel 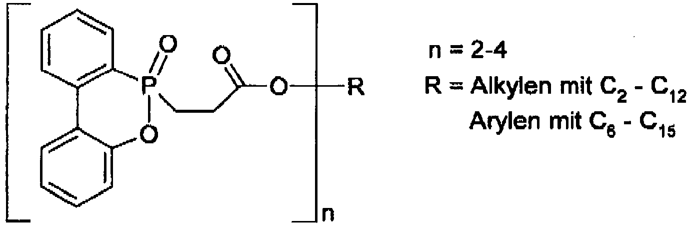 oder deren Mischungen,
D) 1 bis 50 Gew.-% eines faserförmigen Füllstoffes mit einem Aspektverhältnis (L/D) von 4 bis 25 und einer mittleren arithmetischen Faserlänge von 40 bis 250 µm,
E) 0 bis 50 Gew.-% weiterer Zusatzstoffe,
wobei die Summe der Gewichtsprozente der Komponenten A) bis E) 100 % ergibt.

Weiterhin betrifft die Erfindung die Verwendung der erfindungsgemäßen Formmassen zur Herstellung von Fasern, Folien und Formkörpern jeglicher Art, sowie die hierbei erhältlichen Formkörper.

Brandwidrig ausgerüstete Polyamide gewinnen in jüngster Zeit zunehmend an Bedeutung. Dabei besteht ein besonderes Interesse an Produkten mit hellen Farbeinstellungen für den Elektrosektor. Von den bekannten Brandschutzsystemen sind jedoch roter Phosphor und Halogenverbindungen in Kombination mit Synergisten für diesen Anwendungsbereich nicht geeignet. Halogenverbindungen setzen die elektrischen Eigenschaften wie Kriechstromfestigkeit und Durchschlagfestigkeit herab. Roter Phosphor kommt wegen seiner Eigenfarbe für helle Farbeinstellungen nicht in Betracht. Zur Herstellung farbheller, unverstärkter und flammwidrig eingestellter Polyamide wird in DE-A 1694254 der Zusatz von Melamin empfohlen. Bei glasfaserverstärkten Polyamiden sind Melamin und Melaminsalze wie z. B. Melamincyanurat weniger wirksam, die Glühdrahtfestigkeit dieser Produkte ist - speziell in dünnen Wandstärken - sehr niedrig.

Unverstärkte Formmassen, die generell eine höhere Glühdrahtbeständigkeit aufweisen, haben hingegen den Nachteil, daß die mechanischen Eigenschaften wie Steifigkeit und Festigkeit nicht ausreichend sind. Der Zusatz von Glasfasern zu Polyamid-Mischungen mit Melamincyanurat verbessert zwar die mechanischen Eigenschaften, jedoch werden die Flammschutzeigenschaften nachteilig beeinflußt, da Glasfasern durch den sogenannten Dochteffekt den Flammschutz drastisch verschlechtern. Entsprechend ist aus der EP-A 241 702 bekannt, daß PA-Mischungen aus Glasfasern mit Melamincyanurat in ihrem Flammschutzverhalten verbessert werden können, indem Kurzglasfasern ohne Schlichte in der Mischung verwendet werden.

Melamincyanurat und Kurzglasfasern mit bestimmter Längenverteilung sind aus der EP-A 848 729 bekannt.

Aus den WO 2008/119693 und 2008/132111 sind DOPO-Derivate als Flammschutzmittel bekannt.

Die Wirksamkeit von Flammschutzadditivmischungen wird im wesentlichen durch Brandprüfungen nach UL94-V beschrieben. Für bestimmte Anwendungen von flammgeschützten Polymeren in der Gebäudeinstallation sowie im Niederspannungs-Schaltgeräten ist jedoch vornehmlich der Glühdrahttest nach IEC 60695-2-12 von Bedeutung, wobei zusätzlich eine hohe Flammwidrigkeit wünschenswert ist.

Bei den genannten Schriften können Glasfasern, soweit verwendet, als konventionelle Endlosfasern (Rovings) oder Schnittfasern (4-6 mm lange Faserbündel) eingesetzt werden. Durch Scherung im Extruder ergibt sich dann eine Glasfaserlängenverteilung im Produkt, die bei üblicher Verarbeitung bei ca. 250-300 µm liegt (bezogen auf ein Produkt mit 25 % Glasfasergehalt). Dabei ist zu berücksichtigen, daß die mittlere Faserlänge im allgemeinen mit zunehmendem Faseranteil sinkt, da es zu erhöhten Faser-Wechselwirkungen in der Einarbeitungszone und damit zu vermehrtem Faserbruch kommt (F. Raumsteiner, R. Theysohn, Comp. Sci. Techn. 23 (1985) 231).

Der Zusatz von Melamincyanurat als Flammschutzmittel ist üblicherweise bei Glasfasergehalten größer 20 Gew.-% nicht mehr ausreichend, um die Glühdrahtprüfung bei geringen Wandstärken zu bestehen.

Aufgabe der vorliegenden Erfindung war es daher, flammgeschützte thermoplastische Formmassen zur Verfügung zu stellen, welche gute mechanische Eigenschaften und einen guten Flammschutz aufweisen. Insbesondere sollte der Zusatz von Kurzglasfasern mit einem bestimmten Aspektverhältnis einen Flammschutz ermöglichen, aus dem möglichst geringe Nachbrennzeiten bei der Glühdrahtprüfung resultieren.

Demgemäß wurden die eingangs definierten Formmassen gefunden. Bevorzugte Ausführungsformen sind den Unteransprüchen zu entnehmen.

Überraschenderweise wurde gefunden, dass Polyamid-Mischungen mit Kurzglasfasern eines bestimmten Aspektverhältnisses zusammen mit einer synergistischen Mischung aus Melamincyanurat und einem Derivat des 9,10-Dihydro-9-oxa-10-phospaphenanthren-oxids (DOPO) die Glühdrahtanforderungen bei geringen Wandstärken auch bei Glasfasergehalten größer 20 Gew.-% erfüllen.

Als Komponente A) enthalten die erfindungsgemäßen Formmassen 20 bis 97,5, vorzugsweise 40 bis 93 und insbesondere 40 bis 84 Gew.-% mindestens eines Polyamides.

Die Polyamide der erfindungsgemäßen Formmassen weisen im allgemeinen eine Viskositätszahl von 90 bis 350, vorzugsweise 110 bis 240 ml/g auf, bestimmt in einer 0,5 gew.-%igen Lösung in 96 gew.-%iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin (z.B. Ultramid^{®} X17 der BASF SE, ein 1:1 molares Verhältnis von MXDA mit Adipinsäure), Di-(4-aminophenyl)methan, Di-(4-amino-cyclohexyl)-methan, 2,2-Di- (4-aminophenyl)-propan, 2,2-Di-(4-aminocyclohexyl)-propan oder 1,5-Diamino2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten (z.B. Ultramid^{®} C31 der BASF SE).

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist. Besonders bevorzugt sind Mischungen von Polyamid 66 mit anderen Polyamiden, insbesondere Copolyamide 6/66.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Weitere hochtemperaturbeständige Polyamide sind aus der EP-A 19 94 075 bekannt (PA 6T/6I/MXD6).

Die Herstellung der bevorzugten teilaromatischen Copolyamide mit niedrigem Triamingehalt kann nach den in den EP-A 129 195 und 129 196 beschriebenen Verfahren erfolgen.

Die nachfolgende nicht abschließende Aufstellung enthält die genannten, sowie weitere Polyamide A) im Sinne der Erfindung und die enthaltenen Monomeren.

### AB-Polymere:

- PA 4: Pyrrolidon
- PA 6: ε-Caprolactam
- PA 7: Ethanolactam
- PA 8: Capryllactam
- PA 9: 9-Aminopelargonsäure
- PA 11: 11-Aminoundecansäure
- PA 12: Laurinlactam
- AA/BB-Polymere PA 46: Tetramethylendiamin, Adipinsäure
- PA 66: Hexamethylendiamin, Adipinsäure
- PA 69: Hexamethylendiamin, Azelainsäure
- PA 610: Hexamethylendiamin, Sebacinsäure
- PA 612: Hexamethylendiamin, Decandicarbonsäure
- PA 613: Hexamethylendiamin, Undecandicarbonsäure
- PA 1212: 1,12-Dodecandiamin, Decandicarbonsäure
- PA 1313: 1,13-Diaminotridecan, Undecandicarbonsäure
- PA 6T: Hexamethylendiamin, Terephthalsäure
- PA 9T: 1,9-Nonandiamin, Terephthalsäure
- PA MXD6: m-Xylylendiamin, Adipinsäure
- AA/BB-Polymere PA 6I: Hexamethylendiamin, Isophthalsäure
- PA 6-3-T: Trimethylhexamethylendiamin, Terephthalsäure
- PA 6/6T: (siehe PA 6 und PA 6T)
- PA 6/66: (siehe PA 6 und PA 66)
- PA 6/12: (siehe PA 6 und PA 12)
- PA 66/6/610: (siehe PA 66, PA 6 und PA 610)
- PA 6I/6T: (siehe PA 6I und PA 6T)
- PA PACM 12: Diaminodicyclohexylmethan, Laurinlactam
- PA 6I/6T/PACM: wie PA 6I/6T + Diaminodicyclohexylmethan
- PA 12/MACMI: Laurinlactam, Dimethyl-diaminodicyclohexylmethan, Isophthalsäure
- PA 12/MACMT: Laurinlactam, Dimethyl-diaminodicyclohexylmethan, Terephthalsäure
- PA PDA-T: Phenylendiamin, Terephthalsäure

Als Monomere kommen auch cyclische Diamine wie die der allgemeinen Formel 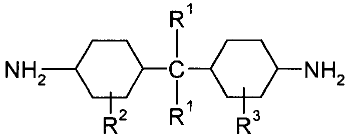 in der
- R¹: Wasserstoff oder eine C₁-C₄-Alkylgruppe,
- R²: eine C₁-C₄-Alkylgruppe oder Wasserstoff und
- R³: eine C₁-C₄-Alkylgruppe oder Wasserstoff bedeutet, in Betracht.

Besonders bevorzugte Diamine sind Bis(4-aminocyclohexyl)-methan, Bis(4-amino-3-methylcyclohexyl)methan, Bis(4-aminocyclohexyl)-2,2-propan oder Bis(4-amino-3-methyl-cyclohexyl)-2,2-propan.

Als weitere Diamine seien 1,3- oder 1,4-Cyclohexandiamin oder Isophorondiamin genannt.

Es können auch Mischungen obiger Polyamide eingesetzt werden.

Als Komponente B) enthalten die erfindungsgemäßen thermoplastischen Formmassen 1 bis 20, bevorzugt 1 bis 15, und insbesondere 5 bis 10 Gew.-% Melamincyanurat.

Das gemäß der Erfindung (Komponente B) geeignete Melamincyanurat ist ein Reaktionsprodukt aus vorzugsweise äquimolaren Mengen von Melamin (Formel I) und Cyanursäure bzw. Isocyanursäure (Formeln la und Ib)

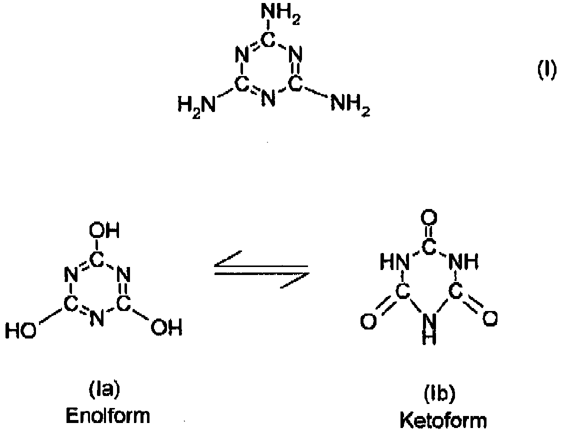

Man erhält es z. B. durch Umsetzung von wässrigen Lösungen der Ausgangsverbindungen bei 90 bis 100°C. Das im Handel erhältliche Produkt ist ein weißes Pulver mit einer mittleren Korngröße d₅₀ von 1, 5-7 µm.

Als Komponente C) enthalten die erfindungsgemäßen Formmassen 1 bis 30, vorzugsweise 1 bis 20 und insbesondere 5 bis 20 Gew.-% einer organischen Phosphorverbindung basierend auf 9, 10-Dihydro-9-oxa-10-phosphaphenanthrenoxid (DOPO) als Grundgerüst: 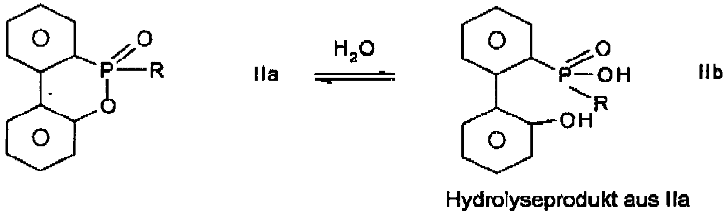 wobei

R = H oder Halogen oder einen aliphatischen oder aromatischen Rest mit 1 bis 18 C-Atomen bedeutet, enthaltend als Komponente C) Oligomere der Formel 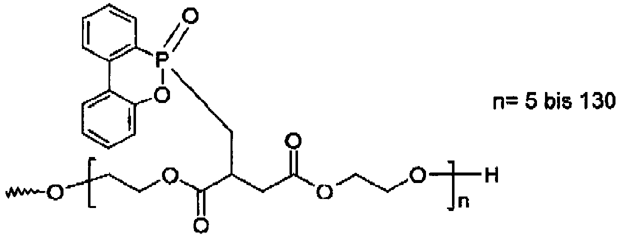 oder Oligomere aus DOPO mit Acrylsäureestern der Formel 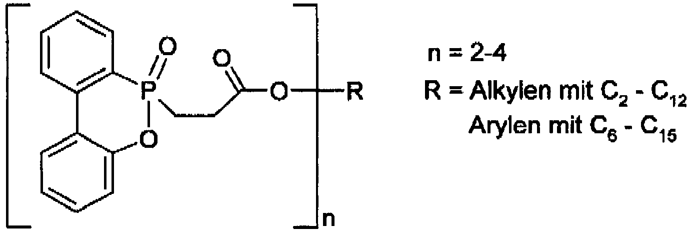 oder deren Mischungen.

Die Verbindung mit R = H (IIa) ist gemäß WO 97/878 erhältlich und als Ukanol® DOP im Handel erhältlich.

Die Formulierung "als Grundgerüst" soll bedeuten, dass in oligomeren als auch polymeren Derivaten wenigstens in der Wiederholungseinheit eine Verbindung der Formel IIa enthalten ist.

Bevorzugt ist

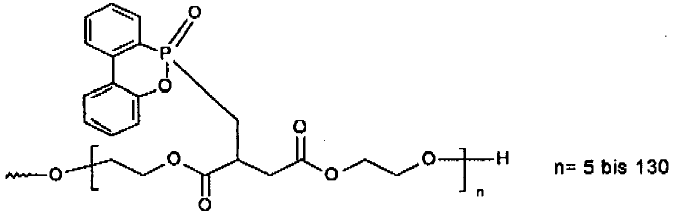

Die oben genannten Verbindungen sind erhältlich gemäß folgender Reaktion:

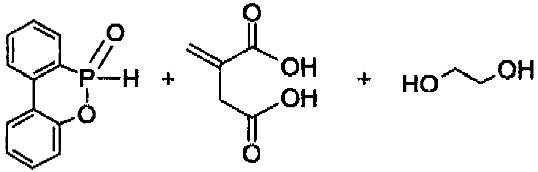

Bevorzugte Komponenten C) sind Oligomere der Formel 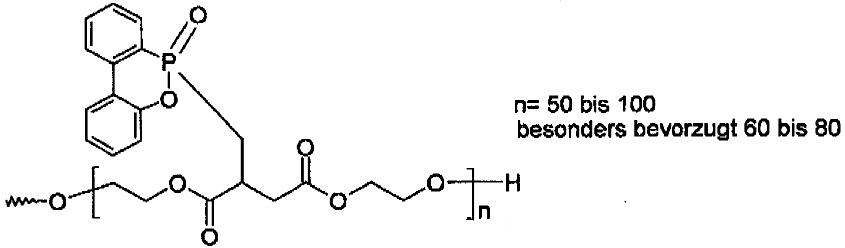 oder 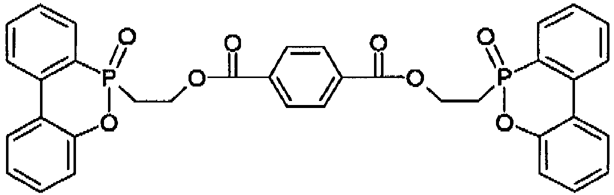 oder Oligomere aus DOPO mit Acrylsäureestern der Formel 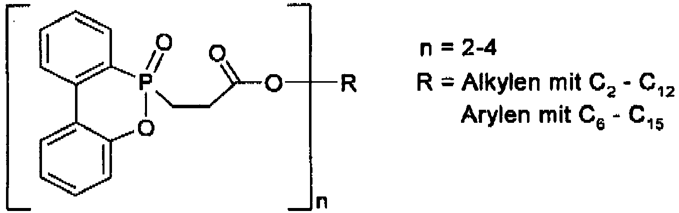 oder deren Mischungen.

Verfahren zur Herstellung der Komponente C) sind dem Fachmann geläufig, so dass sich weitere Einzelheiten erübrigen.

Als Komponente D) enthalten die erfindungsgemäßen Formmassen 1 bis 50, vorzugsweise 5 bis zu 40 Gew.-%, und insbesondere 10 bis 35 Gew.-% eines faserförmigen Füllstoffes mit einem Aspektverhältnis von 4 bis 25 und einer mittleren arithmetrischen Faserlänge (d₅₀ Wert) von 50 bis 250 µm, vorzugsweise von 50 bis 150 und insbesondere von 60 bis 120 µm.

Der mittlere Faserdurchmesser beträgt im allgemeinen 5 bis 25 µm, bevorzugt 6 bis 20 µm und insbesondere 9 bis 18 µm. Das bevorzugte Aspektverhältnis beträgt entsprechend von 4 bis 20 von 5 bis 15 und insbesondere von 6 bis 13.

Die gewünschte Faserlänge kann z.B. durch Mahlen in einer Kugelmühle oder einer Schneidmühle eingestellt werden, wobei eine Faserlängenverteilung entsteht. Die Reduzierung der Faserlänge führt, wenn die mittlere Faserlänge kleiner 200 µm ist, zu einem rieselfähigen Schüttgut, das wie ein Pulver in das Polymer eingemischt werden kann. Aufgrund der geringen Faserlänge tritt beim Einarbeiten nur noch eine geringe weitere Verkürzung der Faserlänge ein. Der Fasergehalt wird üblicherweise nach Veraschen des Polymeren bestimmt. Zur Bestimmung der Faserlängenverteilung wird im allgemeinen der Asche-Rückstand in Silikonöl aufgenommen und mittels eines Mikroskops fotografiert. Aus den Bildern können bei mindestens 500 Fasern die Länge ausgemessen und der arithmetische Mittelwert und/oder d₅₀-Wert (Median) berechnet werden. Gleichzeitig mit der Bestimmung des d₅₀-Wertes können auch die d₁₀- und d₉₀-Werte der Glasfaserlängenverteilung bestimmt werden.

Entsprechend kann aus o.g. Meßmethode das Aspektverhältnis ermittelt werden.

Der d₅₀ bzw. Median-Wert ist das Maß für die mittlere Faserlänge, d.h. 50 Volumen % der Probe sind kürzer und die anderen 50 % sind länger als d₅₀, d₁₀ und d₉₀ beschreiben in Analogie den kürzeren bzw. längeren Faseranteil der Stichprobe.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben:

X NH₂-,

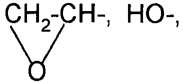

- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,01 bis 2, vorzugsweise 0,025 bis 1,0 und insbesondere 0,05 bis 0,5 Gew.-% (bezogen auf D)) zur Oberflächenbeschichtung eingesetzt.

Geeignet sind auch nadelförmige mineralische Füllstoffe. Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als Komponente E) können die erfindungsgemäßen Formmassen 0 bis 50, vorzugsweise bis zu 30 Gew.-% weiterer Zusatzstoffe enthalten.

Teilchenförmige Füllstoffe, verschieden von D, können in Mengen von 1 bis 50, vorzugsweise 5 bis 40 Gew.-% enthalten sein.

Als geeignete Füllstoffe seien Kaolin, calciniertes Kaolin, Wollastonit, Talkum und Kreide genannt sowie zusätzlich plättchen- oder nadelförmige Nanofüllstoffe bevorzugt in Mengen zwischen 0,1 und 10 %. Bevorzugt werden hierfür Böhmit, Bentonit, Montmorillonit, Vermicullit, Hektorit und Laponit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert.

Als Komponente E) können die erfindungsgemäßen Formmassen 0,05 bis 3, vorzugsweise 0,1 bis 1,5 und insbesondere 0,1 bis 1 Gew.-% eines Schmiermittels enthalten.

Bevorzugt sind Al-, Alkali-, Erdalkalisalze oder Ester oder Amide von Fettsäuren mit 10 bis 44 C-Atomen, vorzugsweise mit 12 bis 44 C-Atomen.

Die Metallionen sind vorzugsweise Erdalkali und AI, wobei Ca oder Mg besonders bevorzugt sind.

Bevorzugte Metallsalze sind Ca-Stearat und Ca-Montanat sowie Al-Stearat.

Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Als Komponente E) können die erfindungsgemäßen Formmassen 0,05 bis 3, vorzugsweise 0,1 bis 1,5 und insbesondere 0,1 bis 1 Gew.-% eines Cu-Stabilisators, vorzugsweise eines Cu-(I)-Halogenids, insbesondere in Mischung mit einem Alkalihalogenid, vorzugsweise KJ, insbesondere im Verhältnis 1 : 4 oder eines Cu-(I)-halogenid-bis-(Triphenylphosphin)-Komplexes, welche gegebenenfalls mit Alkalihalogeniden (z.B. KJ) gemischt vorliegen oder eines sterisch gehinderten Phenols oder deren Mischungen enthalten.

Als Salze des einwertigen Kupfers kommen vorzugsweise Kupfer(I)-Acetat, Kupfer(I)-Chlorid, - Bromid und -Jodid in Frage. Diese sind in Mengen von 5 bis 500 ppm Kupfer, vorzugsweise 10 bis 250 ppm, bezogen auf Polyamid, enthalten. Die Verwendung von Cu-Komplexen kann insbesondere für die elektrische Eigenschaften vorteilhaft sein.

Die vorteilhaften Eigenschaften werden insbesondere erhalten, wenn das Kupfer in molekularer Verteilung im Polyamid vorliegt. Dies wird erreicht, wenn man der Formmasse ein Konzentrat zusetzt, das Polyamid, ein Salz des einwertigen Kupfers und ein Alkalihalogenid in Form einer festen, homogenen Lösung enthält. Ein typisches Konzentrat besteht z.B. aus 79 bis 95 Gew.-% Polyamid und 21 bis 5 Gew.-% eines Gemisches aus Kupferjodid oder -bromid und Kaliumjodid. Die Konzentration der festen homogenen Lösung an Kupfer liegt bevorzugt zwischen 0,3 und 3, insbesondere zwischen 0,5 und 2 Gew.-%, bezogen auf das Gesamtgewicht der Lösung und das molare Verhältnis von Kupfer(I)-Jodid zu Kaliumjodid liegt zwischen 1 und 11,5, vorzugsweise zwischen 1 und 5.

Geeignete Polyamide für das Konzentrat sind Homopolyamide und Copolyamide, insbesondere Polyamid 6 und Polyamid 6.6.

Als sterisch gehinderte Phenole E) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel 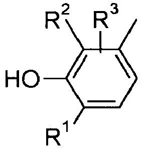 in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und R³ eine Alkylgruppe, eine substituierte Alkylgruppe, eine Alkoxigruppe oder eine substituierte Aminogruppe.
Antioxidantien der genannten Art werden beispielsweise in der DE-A 27 02 661 (USA 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 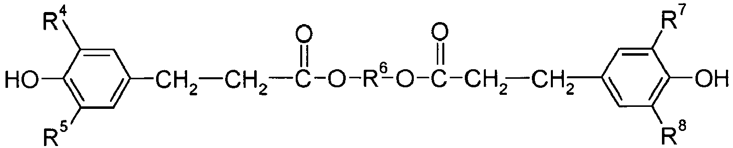 wobei R⁴, R⁵, R⁷ und R⁸ unabhängig voneinander C₁-C₈-Alkylgruppen darstellen, die ihrerseits substituiert sein können (mindestens eine davon ist eine sterisch anspruchsvolle Gruppe) und R⁶ einen zweiwertigen aliphatischen Rest mit 1 bis 10 C-Atomen bedeutet, der in der Hauptkette auch C-O-Bindungen aufweisen kann.

Bevorzugte Verbindungen, die diesen Formeln entsprechen, sind 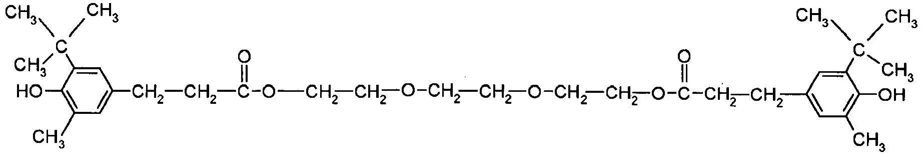 (Irganox® 245 der Firma BASF SE)

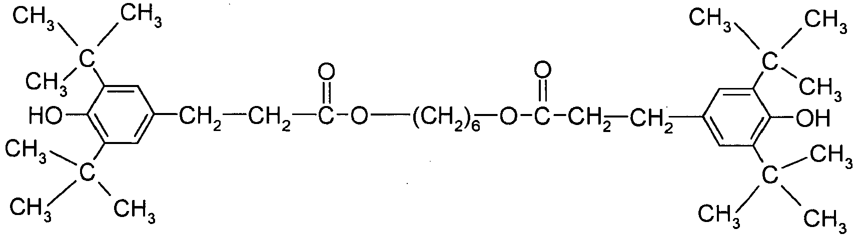

### (Irganox® 259 der Firma BASF SE)

### Beispielhaft genannt seien insgesamt als sterisch gehinderte Phenole:

2,2'-Methylen-bis-(4-methyl-6-tert.-butylphenol), 1,6-Hexandiol-bis[3-(3,5-di-tert.-butyl-4-hydroxyphenyl)-propionat), Pentaerythrityl-tetrakis-[3-(3,5-di-tert.-butyl-4-hydroxy-phenol)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydro-cinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin.

Als besonders wirksam erwiesen haben sich und daher vorzugsweise verwendet werden 2,2'-Methylen-bis-(4-methyl-6-tert.-butylphenyl), 1,6-Hexandiol-bis-(3,5-di-tert.-butyl-4-hydroxy-phenyl]-propionat (Irganox® 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydrocinnamid (Irganox® 1098) und das vorstehend beschriebene Irganox® 245 der Firma Ciba Geigy, das besonders gut geeignet ist.

Die Antioxidantien E), die einzeln oder als Gemische eingesetzt werden können, sind in einer Menge von 0,05 bis zu 3 Gew.-%, vorzugsweise von 0,1 bis 1,5 Gew.-%, insbesondere 0,1 bis 1 Gew.-%, bezogen auf das Gesamtgewicht der Formmassen A) bis E) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Als Komponente E) können die erfindungsgemäßen Formmassen 0,05 bis 5, vorzugsweise 0,1 bis 2 und insbesondere 0,25 bis 1,5 Gew.-% eines Nigrosins enthalten.

Unter Nigrosinen versteht man im allgemeinen eine Gruppe von schwarzen oder grauen, mit den Indulinen verwandten Phenazin-Farbstoffen (Azin-Farbstoffen) in verschiedenen Ausführungsformen (wasserlöslich, fettlöslich, spritlöslich), die bei Wollfärberei und -druck, beim Schwarzfärben von Seiden, zum Färben von Leder, Schuhcremes, Firnissen, Kunststoffen, Einbrennlacken, Tinten und dergleichen, sowie als Mikroskopiefarbstoffe Verwendung finden.

Man gewinnt die Nigrosine technisch durch Erhitzen von Nitrobenzol, Anilin und salzsaurem Anilin mit metall. Eisen und FeCl₃ (Name von lateinischem niger = schwarz).

Die Komponente E) kann als freie Base oder auch als Salz (z.B. Hydrochlorid) eingesetzt werden.

Weitere Einzelheiten zu Nigrosinen sind beispielsweise dem elektronischen Lexikon Römpp Online, Version 2.8, Thieme-Verlag Stuttgart, 2006, Stichwort "Nigrosin" zu entnehmen.

Weitere übliche Zusatzstoffe E) sind beispielsweise in Mengen bis zu 25, vorzugsweise bis zu 20 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im Folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im Allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopen-tadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R¹C(COOR²)=C(COOR³)R⁴ (I)

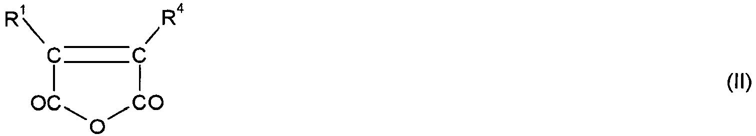

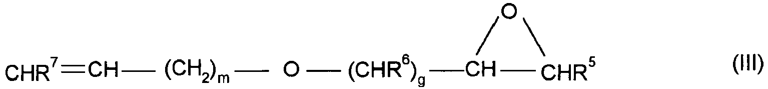

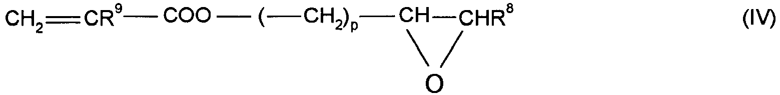

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Al-lylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus
- 50 bis 98,: insbesondere 55 bis 95 Gew.-% Ethylen,
- 0,1 bis 40,: insbesondere 0,3 bis 20 Gew.-% Glycidylacrylat und/oder Glycidyl-methacrylat, (Meth)acrylsäure und/oder Maleinsäureanhydrid, und
- 1 bis 45,: insbesondere 5 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 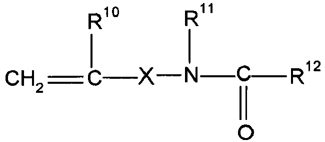 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder 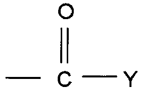
- Y: O-Z oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im Allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Als Komponente E) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, usw. enthalten.

Als Beispiele für Oxidationsverzögerer und Wärmestabilisatoren sind sterisch gehinderte Phenole und/oder Phosphite und Amine (z.B. TAD), Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.

Nach einer weiteren bevorzugten Arbeitsweise können die Komponenten B), C) und D) sowie gegebenenfalls E) mit einem Präpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch eine gute Flammwidrigkeit und eine hervorragende Glühdrahtbeständigkeit aus.

Diese eignen sich zur Herstellung von Fasern, Folien und Formkörpern jeglicher Art. Nachfolgend sind einige Beispiele genannt: Steckverbinder, Stecker, Steckerteile, Kabelbaumkomponenten, Schaltungs-träger, Schaltungsträgerkomponenten, dreidimensional spritzgegossene Schaltungsträger, elektrische Verbindungselemente und mechatronische Komponenten.

Die erfindungsgemäß aus den thermoplastischen Formmassen herzustellenden Formteile oder Halbzeuge können beispielsweise in der Kraftfahrzeug-, Elektro-, Elektronik-, Telekommunikations-, Informationstechnologie-, Unterhaltungs-, Computerindustrie, in Fahrzeugen und anderen Fortbewegungsmitteln, in Schiffen, Raumschiffen, im Haushalt, in Büroausstattungen, Sport, in der Medizin sowie allgemein in Gegenständen und Gebäudeteilen die einen erhöhten Brandschutz erfordern angewandt werden.

Für den Küchen- und Haushaltsbereich ist der Einsatz fließverbesserter Polyamide zur Herstellung von Komponenten für Küchengerate, wie z.B. Friteusen, Bügeleisen, Knöpfe, sowie Anwendungen im Garten- und Freizeitbereich möglich.

### Beispiele

Es wurden folgende Komponenten verwendet:
Komponente A/1: Polyamid 6 mit einer Viskositätszahl VZ von 125 ml/g, gemessen als 0.5 gew.-%ige Lösung in 96 gew.-%iger Schwefelsäure bei 25°C nach ISO 307 (Es wurde Ultramid® B24 der BASF SE verwendet).
Komponente A/2: Polyamid 6 mit einer Viskositätszahl VZ von 150 ml/g, gemessen als 0.5 gew.-%ige Lösung in 96 gew.-%iger Schwefelsäure bei 25°C nach ISO 307 (Es wurde Ultramid® B27 der BASF SE verwendet).
Komponente A/3: Co-Polyamid 66/6 bestehend aus 9 Teilen PA66 und 1 Teil PA6 mit einer Viskositätszahl VZ von 145 ml/g, gemessen als 0.5 gew.-%ige Lösung in 96 gew.-%iger Schwefelsäure bei 25°C nach ISO 307.
Komponente B: Melamincyanurat mit einer mittleren Teilchengröße d₅₀ von -2.6 µm (Melapur® MC 25 ex Fa. BASF SE).
Komponente C: Oligokondensat aus 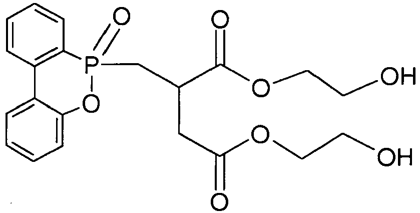
UKANOL®-FR50/1 (Handelsprodukt Schill & Seilacher).
Name: Poly[oxy-1,2-ethanediyloxy[[(6-oxido-6H-dibenz[c,e][1,2]oxaphosphorin-6-yl)methyl]-1,4-dioxo-1,4-butanediyl]], CAS-No. 68816-19-3. Die Herstellung ist z.B. beschrieben in WO2009/109347, in DE-A2646218 und in JP2000/336132.
Komponente D/1: Standard Schnittglasfaser für Polyamide, L = 4.0 mm, D = 10 µm L/D: 400
Komponente D/2: Kurzglasfaser, mittlere Länge (d₅₀) ∼ 210 µm, D = 10 µm L/D 21.0
Komponente D/3: Kurzglasfaser, mittlere Länge (d₅₀) ∼ 150 µm, Durchmesser = 14 µm L/D 10.7

### Komponente E/1:

Irganox® 1098 der BASF SE in allen Formulierungen 0.3 % 3,3'-BIS(3,5-di-tert-butyl-4-hydroxy-phenyl)-N,N'-hexamethylenedipropionamide (CAS-No. 23128-74-7).

### Komponente E/2:

jeweils 0,25 Gew.-% Ca-stearat (CAS 1592-2 3-0)

### Komponente E/3:

jeweils 0,12 Gew.-% N,N'-Ethylenbisstearylamid

### Komponente E/4:

jeweils 2,53 Gew.-% Ti-dioxid.

### Herstellung der Formmassen

Die einzelnen Komponenten wurden in einem Zweiwellenextruder ZSK 26 bei einem Durchsatz von 20 kg/h und ca. 250 - 270°C bei flachem Temperaturprofil gemischt, als Strang ausgetragen, bis zur Granulierfähigkeit abgekühlt und granuliert.

Die Prüfkörper für die in Tabelle 1 aufgeführten Untersuchungen wurden auf einer Spritzgießmaschine des Typs Arburg 420C bei einer Massetemperatur von ca. 250 - 290°C und einer Werkzeugtemperatur von ca. 80°C verspritzt.

Die Flammwidrigkeit der Formmassen wurde zum einen nach der Methode UL94 (Underwriters Laboratories Inc. Standard of Safety, "Test for Flammability of Plastic Materials for Parts in Devices and Appliances", S. 14 bis S. 18 Northbrook 1998) bestimmt.

Die Glühdrahtbeständigkeit wurde gemäß der Glühdrahtentzündlichkeitsprüfung GWFI (Glow-Wire-Flammability-Index) nach 60695-2-12 bestimmt. Bei der GWFI-Prüfung wird an 3 Prüfkörpern (beispielsweise an Platten der Geometrie 60 x 60 x 1,0 mm oder Rundscheibe) mit Hilfe eines glühenden Drahtes bei Temperaturen zwischen 550 und 960°C die maximale Temperatur ermittelt, die in 3 aufeinander folgenden Tests auch während der Einwirkzeit des Glühdrahtes nicht zur Entzündung führt. Der Probekörper wird 30 Sekunden lang mit einer Kraft von 1 Newton gegen einen aufgeheizten Glühdraht gepresst. Die Eindringtiefe des Glühdrahts ist auf 7 mm begrenzt. Der Test ist bestanden wenn der Probekörper nach Entfernen des Glühdrahtes weniger als 30 Sekunden nachbrennt und wenn sich ein unter dem Probekörper liegendes Seidenpapier nicht entzündet.

Der Zugversuch wurde gemäß ISO 527 durchgeführt, die Schlagzähigkeit gemäß ISO 179/1 eU. Der MVR wurde bei 275°C und 5 kg Belastung gemäß ISO 1133 bestimmt.

Die Zusammensetzungen der Formmassen und die Ergebnisse der Messungen sind der Tabelle zu entnehmen.

**Tabelle**

| Komponente/ Testmethode [Gew.-%] | V1 | V2 | V3 | V4 | E1 | E2 | E3 | E4 |
|---|---|---|---|---|---|---|---|---|
| A/1 | | | 57.3 | | | | | |
| A/2 | 57.3 | 58.8 | | 57.3 | 57.3 | 57.3 | 62.3 | |
| A/3 | | | | | | | | 57.3 |
| B | 8 | 8 | 9.5 | 9.5 | 8 | 8 | 8 | 8 |
| C | 1.5 | | | | 1.5 | 1.5 | 1.5 | 1.5 |
| D/1 | 30 | | | | | | | |
| D/2 | | 30 | 30 | 30 | 30 | | | |
| D/3 | | | | | | 30 | 25 | 30 |
| E* gesamt | 3.2 | 3.2 | 3.2 | 3.2 | 3.2 | 3.2 | 3.2 | 3.2 |
| Zug-E-Modul [MPa] | 10350 | 8400 | 8550 | 5250 | 8350 | 8000 | 6800 | 8200 |
| Streckspannung [M Pa] | 138 | 110 | 110 | 106 | 102 | 94 | 90 | 98 |
| Bruchdehnung [%] | 2.2 | 2.5 | 2.2 | 2.4 | 2.0 | 2.6 | 3.1 | 2.9 |
| Schlagzähigkeit [kJ/m²] | 41 | 42 | 37 | 41 | 31 | 33 | 37 | 25 |
| MVR [275°C/5kg] [ml/10'] | 80 | 57 | 155 | 79 | 75 | 87 | 90 | 100 |
| Glasfaser-Längenverteilung am extrudierten Granulat (arithmetrische mittlere Faserlänge) | 181 | 107 | 100 | 102 | 104 | 136 | 119 | 112 |
| Aspektverhältnis mittlere Faserlänge /Durchmesser | 18.1 | 10.7 | 10.0 | 10.2 | 10.4 | 9.7 | 8.5 | 8 |
| UL94-V Prüfung (0.8mm) | V-2 | V-2 | V-2 | V-2 | V-2 | V-2 | V-2 | V-2 |
| GWFI 960° C / 1.0mm | nicht erfüllt | nicht erfüllt | nicht erfüllt | nicht erfüllt | erfüllt | erfüllt | erfüllt | erfüllt |

## Patentansprüche

1. Thermoplastische Formmassen enthaltend
A) 29 bis 97,5 Gew.-% eines thermoplastischen Polyamides,
B) 1 bis 20 Gew.-% Melamincyanurat,
C) 0,5 bis 10 Gew.-% einer organischen Phosphorverbindung basierend auf 9,10-Dihydro-9-oxa-10-phosphaphenanthrenoxid (DOPO) als Grundgerüst, enthaltend als Komponente C) Oligomere der Formel 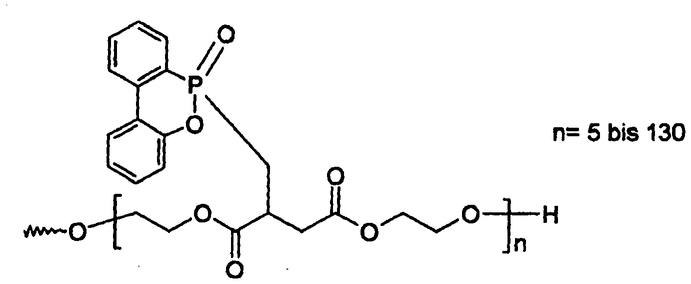 oder Oligomere aus DOPO mit Acrylsäureestern der Formel 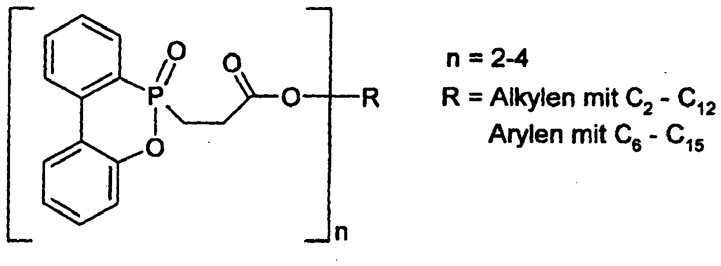 oder deren Mischungen,
D) 1 bis 50 Gew.-% eines faserförmigen Füllstoffes mit einem Aspektverhältnis (L/D) von 4 bis 25 und einer mittleren arithmetischen Faserlänge von 40 bis 250 µm,
E) 0 bis 50 Gew.-% weiterer Zusatzstoffe,
wobei die Summe der Gewichtsprozente der Komponenten A) bis E) 100 % ergibt.

2. Thermoplastische Formmassen nach Anspruch 1, enthaltend Glas-, Carbonfasem oder deren Mischungen als Komponente D).

3. Thermoplastische Formmassen nach den Ansprüchen 1 oder 2, in denen die Komponente B) eine mittlere Teilchengröße (d₅₀-Wert) von 1,5 bis 7 µm aufweist.

4. Thermoplastische Formmassen nach den Ansprüchen 1 bis 3, in denen die Komponente D) ein L/D-Verhältnis von 6 bis 20 aufweist.

5. Thermoplastische Formmassen nach den Ansprüchen 1 bis 4, in denen die Komponente D) eine mittlere arithmetrische Faserlänge von 50 bis 150 µm aufweist.

6. Verwendung der thermoplastischen Formmassen gemäß den Ansprüchen 1 bis 5 zur Herstellung von Fasern, Folien und Formkörpern.

7. Fasern, Folien und Formkörper erhältlich aus den thermoplastischen Formmassen gemäß den Ansprüchen 1 bis 5.

## Claims

1. A thermoplastic molding composition comprising
a) from 29 to 97.5% by weight of a thermoplastic polyamide,
b) from 1 to 20% by weight of melamine cyanurate,
c) from 0.5 to 10% by weight of an organic phosphorus compound based on 9,10-dihydro-9-oxa-10-phosphaphenanthrene oxide (DOPO) as parent structure, comprising, as component C), oligomers of the formula 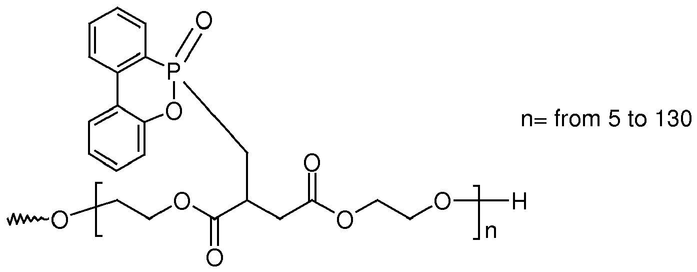 or oligomers of DOPO with acrylates of the formula 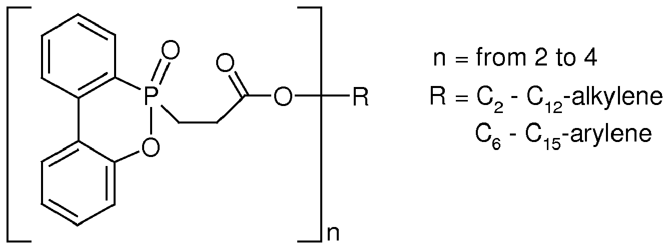 or a mixture of these,
d) from 1 to 50% by weight of a fibrous filler, the aspect ratio (L/D) of which is from 4 to 25, and the arithmetic average fiber length of which is from 40 to 250 µm, and
e) from 0 to 50% by weight of further additives, where the total of the percentages by weight of components A) to E) is 100%.

2. The thermoplastic molding composition according to Claim 1, comprising glass fibers, carbon fibers, or a mixture of these as component D).

3. The thermoplastic molding composition according to claim 1 or 2, in which the average particle size (d₅₀ value) of component B) is from 1.5 to 7 µm.

4. The thermoplastic molding composition according to claims 1 to 3, in which the L/D ratio of component D) is from 6 to 20.

5. The thermoplastic molding composition according to claims 1 to 4, in which the arithmetic average fiber length of component D) is from 50 to 150 µm.

6. The use of the thermoplastic molding compositions according to claims 1 to 5 for producing fibers, foils, and moldings.

7. A fiber, foil, or molding obtainable from the thermoplastic molding compositions according to claims 1 to 5.

## Revendications

1. Matériaux de moulage thermoplastiques, contenant :
A) 29 à 97,5 % en poids d'un polyamide thermoplastique,
B) 1 à 20 % en poids de cyanurate de mélamine,
C) 0,5 à 10 % en poids d'un composé de phosphore organique à base d'oxyde de 9,10-dihydro-9-oxa-10-phosphaphénanthrène (DOPO) en tant que squelette de base, contenant en tant que composant C) des oligomères de formule 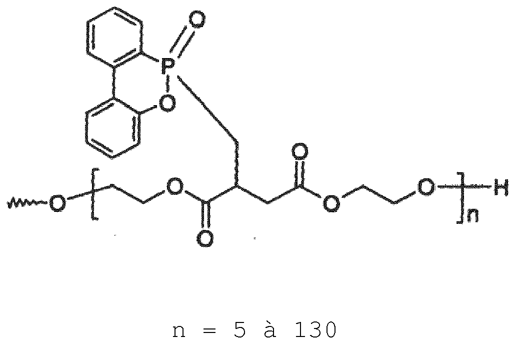 ou des oligomères de DOPO avec des esters de l'acide acrylique de formule 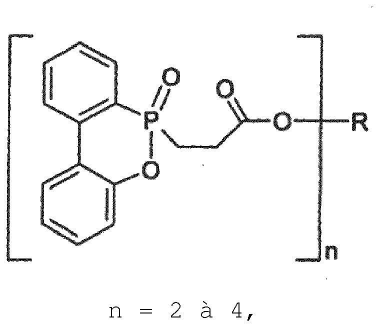 R = alkylène en C₂-C₁₂, arylène en C₆-C₁₅
ou leurs mélanges,
D) 1 à 50 % en poids d'une charge fibreuse présentant un rapport de longueur (L/D) de 4 à 25 et une moyenne arithmétique de la longueur de fibre de 40 à 250 µm,
E) 0 à 50 % en poids d'additifs supplémentaires, la somme des pourcentages en poids des composants A) à E) étant de 100 %.

2. Matériaux de moulage thermoplastiques selon la revendication 1, contenant des fibres de verre, de carbone ou leurs mélanges en tant que composant D).

3. Matériaux de moulage thermoplastiques selon les revendications 1 ou 2, dans lesquels le composant B) présente une taille de particule moyenne (valeur d₅₀) de 1,5 à 7 µm.

4. Matériaux de moulage thermoplastiques selon les revendications 1 à 3, dans lesquels le composant D) présente un rapport L/D de 6 à 20.

5. Matériaux de moulage thermoplastiques selon les revendications 1 à 4, dans lesquels le composant D) présente une moyenne arithmétique de la longueur de fibre de 50 à 150 µm.

6. Utilisation des matériaux de moulage thermoplastiques selon les revendications 1 à 5 pour la fabrication de fibres, de films et de corps moulés.

7. Fibres, films et corps moulés pouvant être obtenus à partir des matériaux de moulage thermoplastiques selon les revendications 1 à 5.
